# EUROPEAN PATENT APPLICATION

(11) **EP 4 715 534 A1**
(43) Date of publication of application: **25.03.2026**
(21) Application number: 25198329.2
(22) Date of filing: 27.08.2025
(51) Int. Cl.: G06F 3/01

(54) **GENERATIVE PRE-TRAINED TRANSFORMER BOT FOR CONVERSATIONAL CONTEXT RETENTION**

(30) Priority: 23.09.2024 US 202418893184
(71) Applicant: Schneider Electric USA, Inc., Andover, MA 01810 (US)
(72) Inventor: MUKHERJEE, Sourik, Bengaluru (IN); Yadalam, Kiran Kumar, Bengaluru (IN); Mutyalapalli, Kranthi Kumar, Bengaluru (IN); Rai, Kaushlendra Kumar, Bengaluru (IN)
(74) Representative: Manitz Finsterwald Patent- und Rechtsanwaltspartnerschaft mbB

(57) **Abstract**

A generative pre-trained transformer (GPT) bot executing a knowledge retention engine configured to generate and retain a summary of immediate conversation history during and in between chat sessions for both single- and multiple-topic discussions. The GPT bot also executes a recommendation engine configured to recommend references of past discussion topics with the latest accepted summary and solutions based on the retained summaries.

## Description

### BACKGROUND

Virtual assistants, chatbots, and the like are often used in a business context to improve user experience (e.g., customer service), lower costs, and/or deploy solutions, applications, services, etc. A chatbot, for example, is a computer program designed to simulate human conversation. Users may communicate with chatbots using a text or voice chat interface, in a manner similar to conversing with another person. Chatbots may interpret words given to them by a user and provide a preset answer.

Often during a chat session, users repeat the same questions or ask the same question in different forms. In the case of a lengthy chat session, the user may lose track of the context and trailing information from the immediately previous chat session, especially when multiple topics are discussed. This leads to ambiguous solutions to the main agenda of the chat session and ineffective troubleshooting. In cases where users engage in similar contexts and interactions, there is currently no automated mechanism to reference or point to past discussions. This absence of context leads to increased effort, time consumption, and reduced effectiveness in managing chat sessions. For this reason, automated retention of contextual information during and between sessions is desired.

### SUMMARY

Aspects of the present disclosure provide a knowledge retention engine configured to generate and retain a summary of immediate conversation history during and in between chat sessions for both single- and multiple-topic discussions. Knowledge retention permits improved solutions to be proposed and leads to proactive solutioning, customer satisfaction, and effective troubleshooting. Aspects of the present disclosure also provide a recommendation engine configured to recommend references of past discussion topics with the latest accepted summary and solutions, which leads to effective user engagement and personalization of support.

In an aspect, a method comprises receiving a request from a first party to initiate an online communications session with a second party and, responsive to the request, establishing the communications session associated with the request between the first and second parties. The method also includes identifying one or more contextual references contained in communications exchanged between the first and second parties during the communications session. The one or more contextual references relate to at least one topic associated with the communications session. The method further comprises executing a knowledge retention engine to generate and retain a summary of the communications exchanged between the first and second parties during the communications session based on the identified one or more contextual references and displaying the summary to the first and second parties during the communications session.

In another aspect, a system for generating and retaining a summary of immediate conversation history during a chat session comprises a chat database, a processor; and a memory device coupled to the processor. The memory device stores processor-executable instructions that, when executed, configure the processor for receiving a request from a first party to initiate an online communications session with a second party and, responsive to the request, establishing the communications session associated with the request between the first and second parties. The instructions also configure the processor for identifying one or more contextual references contained in communications exchanged between the first and second parties during the communications session. The one or more contextual references relating to at least one topic associated with the communications session. The instructions further configure the processor for executing a knowledge retention engine to generate and retain a summary of the communications exchanged between the first and second parties during the communications session in the chat database and displaying the summary to the first and second parties during the communications session. The summary is based on the identified one or more contextual references.

In yet another aspect, a web service comprises a knowledge base, an interface, a chatbot, and a generative pre-trained transformer (GPT) bot. The interface is configured to receive input from a user initiating an online communications session and the chatbot is configured to establish the communications session with the user in response to the received input. The GPT bot, which is coupled to the chatbot, comprises an artificial intelligence (AI) engine and a chat database. The Al engine is configured to identify one or more contextual references relating to at least one topic contained in communications exchanged between the chatbot and the user during the communications session. The Al engine is further configured to generate a summary of the at least one topic based the identified one or more contextual references, wherein the summary is stored in the chat database.

Other objects and features of the present invention will be in part apparent and in part pointed out herein.

### BRIEF DESCRIPTION OF THE DRAWINGS

FIG. 1 illustrates a simplified interaction between a user and a generative pre-trained transformer (GPT) bot according to an embodiment.
FIG. 2 illustrates the GPT bot of FIG. 1 extracting conversation history according to an embodiment.
FIG. 3 illustrates a high level logical model of the GPT bot of FIG. 1 according to an embodiment.
FIG. 4 illustrates a low level logical model of the GPT bot of FIG. 1 according to an embodiment.
FIGS. 5A to 5C illustrate a low level logical model of the GPT bot of FIG. 1 according to another embodiment.
FIG. 6 is a block diagram of a conversational knowledge retention system according to an embodiment.
FIG. 7 illustrates an example database structure of a chat database of the GPT bot of FIG. 1 according to an embodiment.
FIG. 8 illustrates an example chat session according to an embodiment.

Corresponding reference characters indicate corresponding parts throughout the drawings.

### DETAILED DESCRIPTION

The features and other details of the concepts, systems, and techniques sought to be protected herein will now be more particularly described. It will be understood that any specific embodiments described herein are shown by way of illustration and not as limitations of the disclosure and the concepts described herein. Features of the subject matter described herein can be employed in various embodiments without departing from the scope of the concepts sought to be protected.

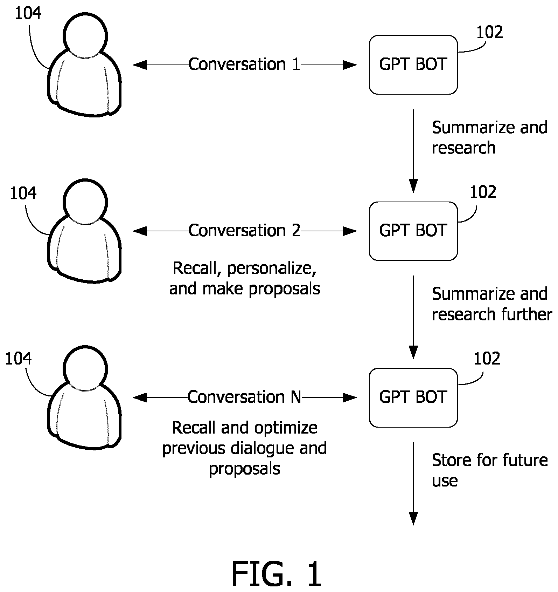

FIG. 1 illustrates optimization of a chat with history and suggestions according to aspects of the present disclosure. In an embodiment, a bot 102 enhances the user experience of both customers and employees, for example, by personalizing a chatbot or other form of computerized chat to automatically store, process, and recall previous interactions and leverage generative artificial intelligence (AI) to continually improve dialogues. FIG. 1 illustrates a simplified interaction between a user 104 and the bot 102, which executes a generative Al engine, such as a generative pre-trained transformer (GPT). As is understood in the art, a bot is a software application that is programmed to perform certain tasks automatically, such as conduct a chat session in accordance with one or more embodiments.

As shown, the user 104 initiates a chat session, or conversation, via a user interface associated with the bot 102. In turn, bot 102 executes its Al engine to generate a summary of immediate conversation history during and following the chat session and to research suitable responses, depending on the nature of the conversation. For example, in the event of a troubleshooting chat, bot 102 researches proposed solutions for resolving the problem. As the chat session continues, multiple topics of conversation can be covered. The bot 102 is configured to recall the previous summary for assisting the user 104 and focusing and personalizing the chat session to deliver improved results. This process continues for any number of topics. In addition, bot 102 preferably retains the summaries for use in future chat sessions (e.g., recommending references of past discussion topics with the latest accepted summary and solutions).

In this manner, bot 102 meets the business need of capturing and summarizing key information from chatbot conversations with customers and employees, developing contextual awareness by summarizing previous interactions to offer more efficient, personalized support, and adding high value by saving time and increasing satisfaction. Automated contextual reference is not embedded in conventional chatbots, which limit their effectiveness and user satisfaction. When users engage repeatedly for similar topics, conventional chatbots are unable to exploit and continue previous interactions. Adding context to chatbots removes duplicated user effort, adds relevant information, saves time and cost and increases satisfaction.

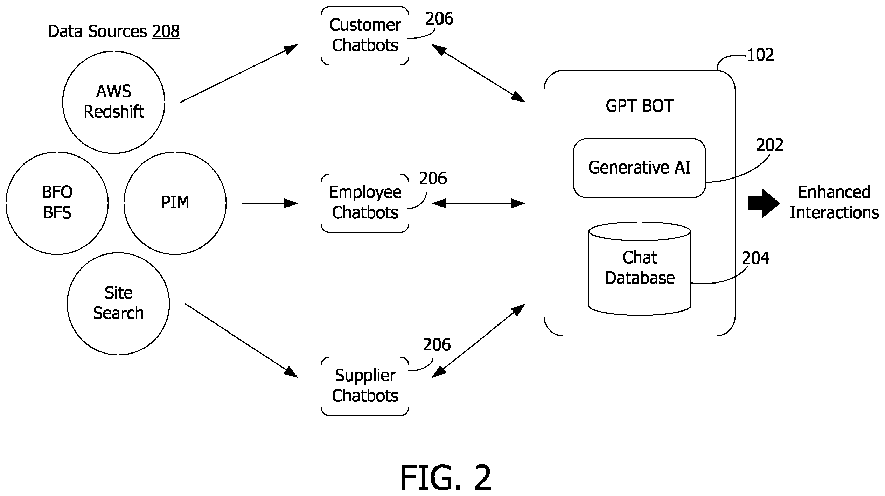

Referring now to FIG. 2, a generative Al engine 202 of the bot 102 extracts conversation history from a chat database 204, both when user 104 is interacting with bot 102 and between the connections. In an embodiment, the chat database 204 is implemented in a serverless, key-value NoSQL database (e.g., Amazon DynamoDB). Multiple users, such as user 104, can engage in various chat sessions with one or more chatbots 206. During the chat sessions, the chatbots 206 retrieve data from one or more data sources 208. For example, data sources 208 may include data retrieved from data lakes (e.g., AWS Redshift), basic formal ontology (BFO) repositories, product information management (PIM) datastores, website searches, breadth first search (BFS) searches, etc. The Al engine 202 summarizes the chat session and shares the summary with user 104. In this manner, users can quickly confirm the chatbot's understanding of their needs. The Al engine 202 also stores user-validated summaries in the chat database 204 for future re-use and provides the summaries with solutions and recommended topics on each new login, using continually enhanced chatbot database history. Advantageously, the data and interaction flows of the illustrated embodiment produce enhanced interactions (e.g., saving time and money, increasing satisfaction, and chatbot profitability).

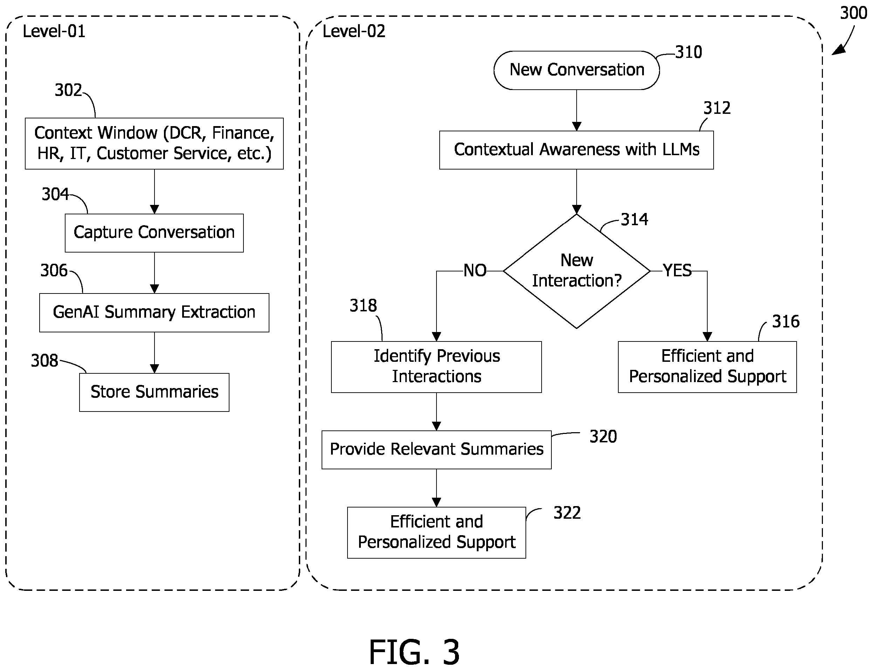

FIG. 3 illustrates a high level logical model 300 of the GPT bot 102 embodying aspects of the present disclosure, indicating it is configured to be compatible with a wide range of chatbot conversations. In Level-01 of the model, a context window 302 identifies the context of the chat session (e.g., Digital Customer Relationship (DCR), Finance, HR, IT, Customer Service, etc.). At 304, bot 102 captures the conversation between user 104 and chatbot 206 during the immediate chat session. The GPT bot 102 then executes its Al engine 202 at 306 to extract a summary of the capture conversation. Proceeding to 308, bot 102 stores the extracted summaries in chat database 204.

When a new conversation, or chat session, begins at 310 of Level-02 of the high level logical model, the GPT bot 102 is configured for executing one or more large language models (LLMs) at 312 to identify the context of the conversation. This contextual awareness permits bot 102 to determine at 314 whether the subject matter of the new chat session has already been discussed. If the interaction is determined at 314 to be new, bot 102 is configured to provide personalized, efficient support to user 104 at 316. On the other hand, if bot 102 determines at 314 that the subject matter of the new chat session has already been discussed, bot 102 identifies the previous interaction at 318 and then retrieves the relevant summary or summaries from the previous interaction at 320. The bot 102 is configured to provide personalized, efficient support to user 104 at 322.

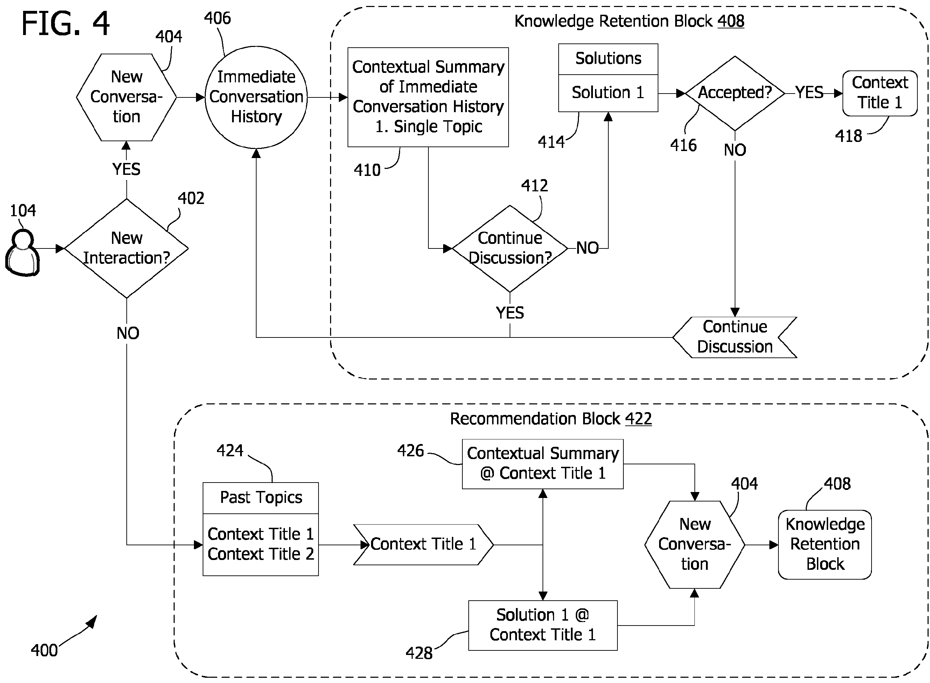

FIG. 4 illustrates a low level logical model 400 of the GPT bot 102 embodying aspects of the present disclosure, indicating it is configured to be compatible for single topic discussion and solution generation in a single conversation. Beginning at 402, user 104 interacts with one of the chatbots 206. If the GPT bot 102 determines at 402 that the interaction is new, a new conversation (i.e., chat session) begins at 404 and immediate conversation history is stored at 406. The bot 102 executes a knowledge retention block 408 for generating a contextual summary of the chat session at 410. If the conversation ends, as determined at 412, bot 102 proceeds to 414 to present a solution, response, recommendation, etc. to user 104. Assuming the user 104 accepts the solution at 416, the topic and solution are stored at 418 (indicated as Context Title 1 in FIG. 4). If the user 104 rejects the solution at 416, or requires further interaction, the conversation continues and returns to 406 to store the conversation history to this point and continue the chat session.

On the other hand, if bot 102 determines at 402 that user 104 previously interacted with the chatbot 206, the GPT bot 102 executes a recommendation block 422 during which bot 102 retrieves relevant past topic(s) at 424, which includes a contextual summary 426 and a stored previous solution 428. Once the recommendation is presented to user 104, the model 400 can begin a new conversation 404.

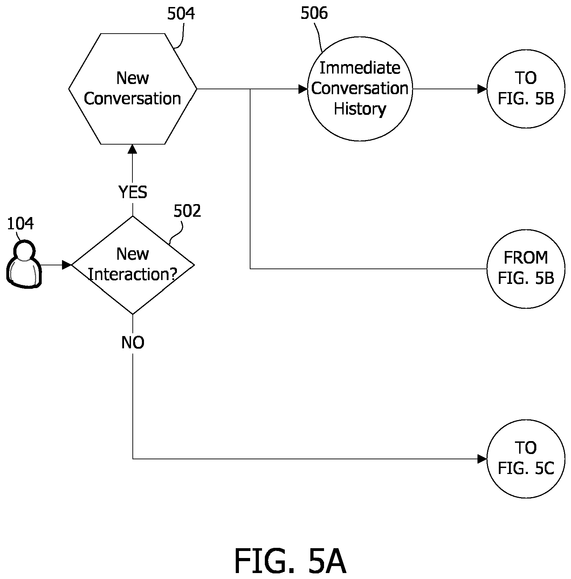

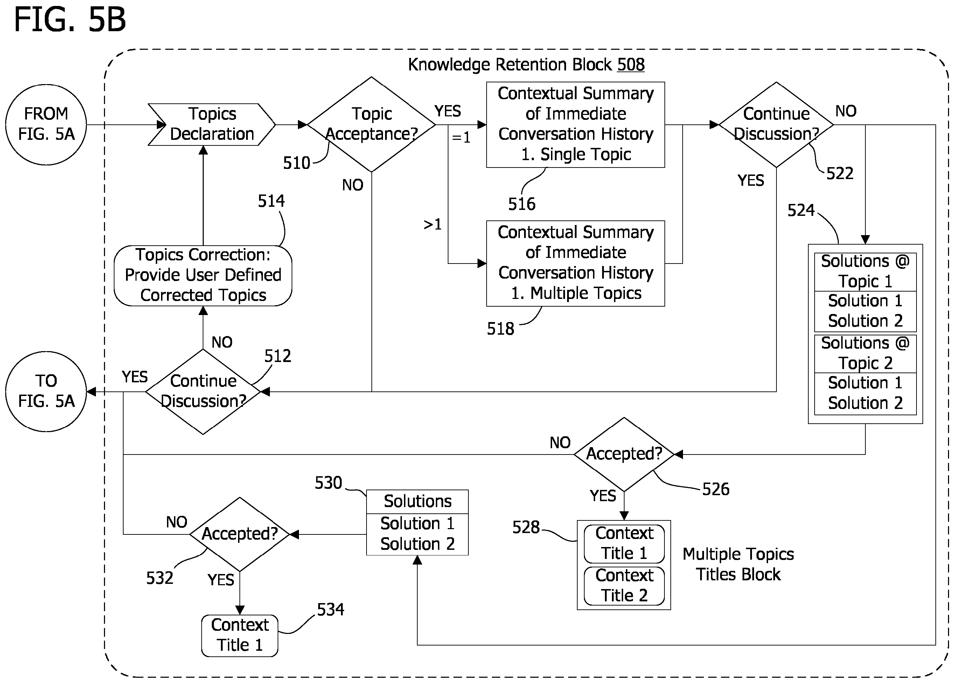

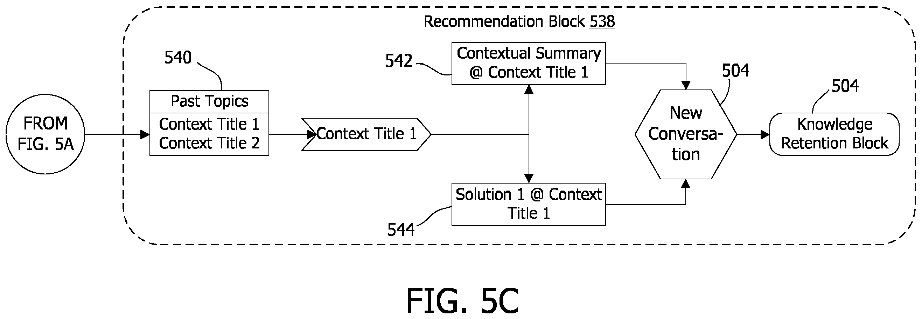

FIG. 5A, FIG. 5B, and FIG. 5C illustrate a low level logical model 500 of the GPT bot 102 embodying aspects of the present disclosure, indicating it is configured to be compatible for multiple topics discussion and solution generation in a single conversation. Beginning at 502, user 104 interacts with one of the chatbots 206. If the GPT bot 102 determines at 502 that the interaction is new, a new conversation (i.e., chat session) begins at 504 and immediate conversation history is stored at 506.

The bot 102 executes a knowledge retention block 508. In FIG. 5B, a first iteration is developed for a single topic. At 510, bot 102 determines if the declared topic is as accepted. If not and the user 104 does not wish to move to a new interaction as determined at 512, the model 500 corrects the topic at 514 and returns to 510. Topic recognition and correction at 510 and 514 occurs during a first iteration. Proceeding to 516, bot 102 generates a contextual summary of the chat session from the stored conversation history for a single topic. Similarly, bot 102 generates contextual summaries of the chat session at 518 from the stored conversation history for multiple topics. If the conversation ends, as determined at 522, bot 102 proceeds to 524 to present solutions, responses, recommendations, etc. to user 104 for multiple topics. Assuming the user 104 accepts the solutions at 526, the topics and solutions are stored at 528 (indicated as Context Title 1 and Context Title 2 in FIG. 5B). If the user 104 rejects the solution at 526, or requires further interaction, the conversation continues and returns to 506 to store the conversation history to this point and continue the chat session.

Similarly, if the conversation ends, as determined at 522, bot 102 proceeds to 530 to present solutions, responses, recommendations, etc. to user 104 for a single topic. In this instance, if user 104 accepts the solution at 532, the topic and solution are stored at 534 (indicated as Context Title 1 in FIG. 5B). If the user 104 rejects the solution at 532, or requires further interaction, the conversation continues and returns to 506 to store the conversation history to this point and continue the chat session.

On the other hand, if bot 102 determines at 502 that user 104 previously interacted with the chatbot 206, the GPT bot 102 executes a recommendation block 538 during which bot 102 retrieves relevant past topic(s) at 540, which includes a contextual summary 542 and a stored previous solution 544. Once the recommendation is presented to user 104, the model 500 can begin a new conversation 504.

Advantageously, the GPT bot 102 executing the models of FIG. 4 and/or FIGS. 5A-5C provide continuous context retention from chat history in between conversations for both single topic and a mixture of multiple topic discussions, which, in turn, enables continuous improved proposal of solutions based on the retained context. The GPT bot 102 embodying aspects of the present disclosure further provides contextual recommendations for multiple past discussion topics and a smooth flow of respective contextual discussions without having to start from scratch. Although described in the context of chatbots 206, the functionality of GPT bot 102 may be embedded in existing chat systems such as Teams, Webex, Google Meet, etc., which would provide the same benefit to users during human-to-human conversations (e.g., Presentation, Meeting).

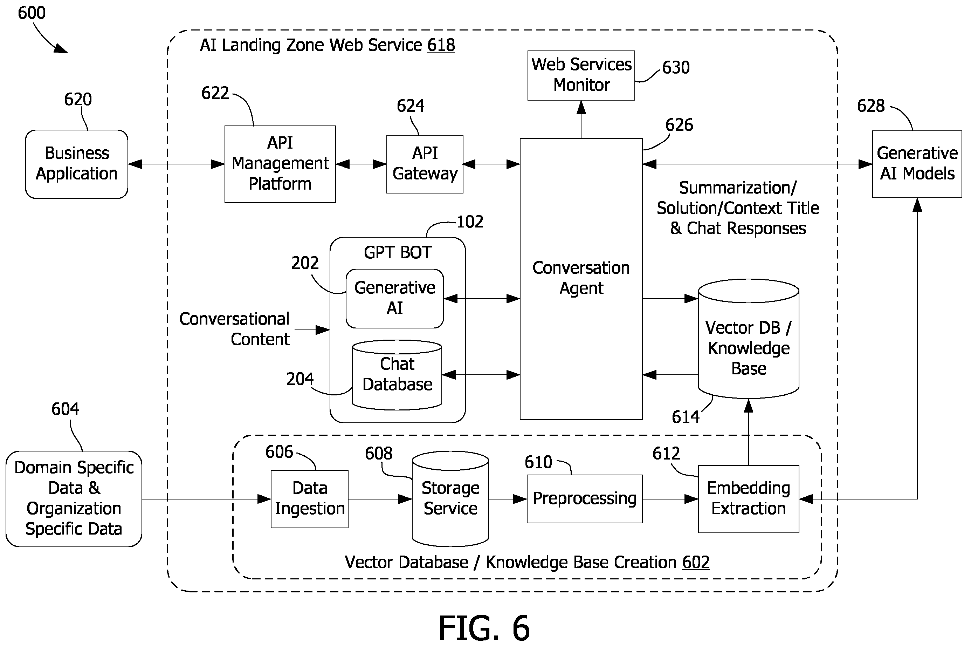

Regarding FIG. 6, a block diagram of a conversational knowledge retention system 600 according to an embodiment is shown. In general, the system 600 prompts an input request, executes a GPT model, and generates an output in accordance with the GPT model for executing the models of FIG. 4 and/or FIGS. 5A-5C. The system 600 includes a vector database/knowledge base creation engine 602, which collects data, such as domain specific and/or organization specific knowledge documents at 604. A data ingestion component 606 receives the data for storage in a storage service 608. A preprocessing component 610 prepares the data for extraction and an embedding extraction component 612 extracts the data for creating a vector database/knowledge base 614. An Al landing zone web service 618 of system 600 operates on the extracted data in the vector database/knowledge base 614. In an embodiment, the Al landing zone 618 is implemented in an on-demand cloud computing platform and it receives input from user 104 via a business application 620. An application programming interface (API) management platform 622 and API gateway 624 provide a secured network and API call with event handler to a conversation agent 626. According to an embodiment, the secured network and API call manages different situational request injection and response preparation. The conversation agent 626 processes the input and feeds a user query/chat history to generative Al models 628, such as one or more LLM models (e.g., hosted in AWS Bedrock). The generative Al models 628 preferably perform different tasks, such as Q&A/summarization and respective response fetch. The GPT bot 102 embodying aspects of the present disclosure stores chat history and intermediate summarization with solutions as well as context title for the customer/ employee (i.e., user 104) in an elastic cache for faster real time retrieval process and backup and stores this data in chat database 204 for long term use. In an embodiment, system 600 includes a web service monitor 630 for monitoring the hosted application performance for future application stability and improvement.

In an embodiment, the system 600 utilizes a cloud service, a vector store (i.e., cloud service enabled component), a database (i.e., cloud service enabled component), one or more LLM models (i.e., cloud service enabled component), and a domain-specific knowledge document. In addition, the system includes configurable components, includes a database, a vector store, an LLM model, a prompt template (consumption role specific), and a user interface.

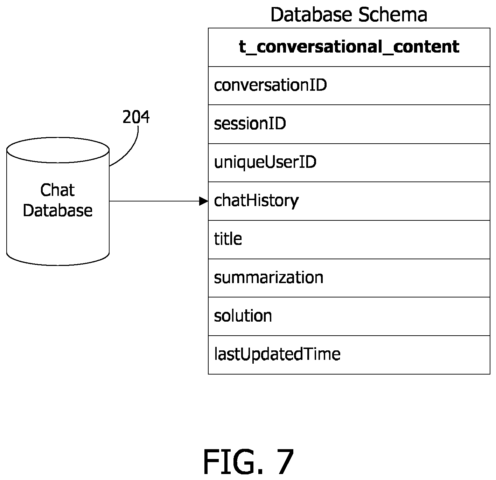

FIG. 7 illustrates an example database structure of the chat database. Advantageously, the disclosed straight-forward structure provides optimized response times and is suitable for enhancement.

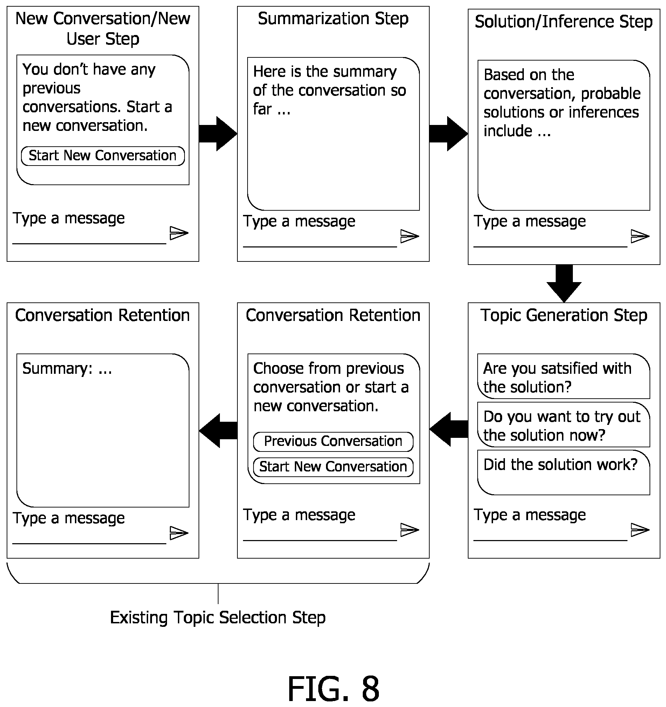

FIG. 8 illustrates an example chat session embodying aspects of the present disclosure. As shown, the example chat session begins with a new conversation, provides a real-time summary as well as a proposed solution, recommendation, or other response, and then asks if the proposed solution is acceptable. The example chat session further illustrates retention and retrieval of previous chat topics.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

## Claims

1. A method comprising:
receiving a request from a first party to initiate an online communications session with a second party;
responsive to the request, establishing the communications session associated with the request between the first and second parties;
identifying one or more contextual references contained in communications exchanged between the first and second parties during the communications session, the one or more contextual references relating to at least one topic associated with the communications session;
executing a knowledge retention engine to generate and retain a summary of the communications exchanged between the first and second parties during the communications session based on the identified one or more contextual references; and
displaying the summary to the first and second parties during the communications session.

2. The method of claim 1, wherein the knowledge retention engine comprises a machine-learned model and further comprising executing the machine-learned model to automatically process, in real-time, the communications exchanged between the first and second parties during the communications session to identify the one or more contextual references.

3. The method of claim 2, further comprising dynamically training the machine-learned model to identify the one or more contextual references based on historic communications sessions.

4. The method of claim 1, further comprising receiving a new request from the first party to initiate a new communications session with the second party and, responsive to the new request, retrieving the summary from a previous communications session between the first and second parties.

5. The method of claim 4, further comprising, responsive to the new request,
reestablishing and resuming the previous communications session between the first and second parties, and/or
further comprising executing a recommendation engine to recommend one or more topics for the new communications session based on the summary from the previous communications session.

6. The method of claim 1, wherein the knowledge retention engine generates the summary of the communications exchanged between the first and second parties during the communications session after at least one of a predetermined number of interactions between the first and second parties and a predetermined interval of time.

7. The method of claim 1, further comprising creating a knowledge base storing the communications session and the one or more contextual references,
in particular, further comprising executing a recommendation engine to retrieve the one or more contextual references from the knowledge base and generate a recommendation of one or more topics for a new communications session based thereon.

8. A system for generating and retaining a summary of immediate conversation history during a chat session, the system comprising:
a chat database;
a processor; and
a memory device coupled to the processor, the memory device storing processor-executable instructions that, when executed, configure the processor for:
receiving a request from a first party to initiate an online communications session with a second party;
responsive to the request, establishing the communications session associated with the request between the first and second parties;
identifying one or more contextual references contained in communications exchanged between the first and second parties during the communications session, the one or more contextual references relating to at least one topic associated with the communications session;
executing a knowledge retention engine to generate and retain a summary of the communications exchanged between the first and second parties during the communications session in the chat database, wherein the summary is based on the identified one or more contextual references; and
displaying the summary to the first and second parties during the communications session.

9. The system of claim 8, wherein the knowledge retention engine comprises a machine-learned model and wherein the memory device further stores processor-executable instructions that, when executed, configure the processor for executing the machine-learned model to automatically process, in real-time, the communications exchanged between the first and second parties during the communications session to identify the one or more contextual references,
in particular, wherein the memory device further stores processor-executable instructions that, when executed, configure the processor for dynamically training the machine-learned model to identify the one or more contextual references based on historic communications sessions.

10. The system of claim 8, wherein the memory device further stores processor-executable instructions that, when executed, configure the processor for receiving a new request from the first party to initiate a new communications session with the second party and, responsive to the new request, retrieving the summary from a previous communications session between the first and second parties.

11. The system of claim 10, wherein the memory device further stores processor-executable instructions that, when executed, configure the processor for, responsive to the new request, reestablishing and resuming the previous communications session between the first and second parties, and/or
wherein the memory device further stores processor-executable instructions that, when executed, configure the processor for executing a recommendation engine to recommend one or more topics for the new communications session based on the summary from the previous communications session.

12. The system of claim 8, wherein the knowledge retention engine generates the summary of the communications exchanged between the first and second parties during the communications session after at least one of a predetermined number of interactions between the first and second parties and a predetermined interval of time.

13. The system of claim 8, further comprising a vector database coupled to the processor, wherein the memory device further stores processor-executable instructions that, when executed, configure the processor for creating a knowledge base in the vector database, the knowledge base storing the communications session and the one or more contextual references,
in particular, wherein the memory device further stores processor-executable instructions that, when executed, configure the processor for executing a recommendation engine to retrieve the one or more contextual references from the knowledge base and generate a recommendation of one or more topics for a new communications session based thereon.

14. A web service comprising:
a knowledge base;
an interface configured to receive input from a user initiating an online communications session;
a chatbot configured to establish the communications session with the user in response to the received input; and
a generative pre-trained transformer (GPT) bot coupled to the chatbot, the GPT bot comprising an artificial intelligence (AI) engine and a chat database, the Al engine configured to identify one or more contextual references relating to at least one topic contained in communications exchanged between the chatbot and the user during the communications session, the Al engine further configured to generate a summary of the at least one topic based the identified one or more contextual references, wherein the summary is stored in the chat database.

15. The web service of claim 14, further comprising:
a data ingestion component configured to receive at least one of domain specific data and organization specific data; and
an extraction component configured to extract knowledge base data from the data ingestion component for populating the knowledge base.
